# EUROPÄISCHE PATENTSCHRIFT

(11) **EP 1 610 102 B1**
(45) Veröffentlichungstag und Bekanntmachung des Hinweises auf die Patenterteilung: **07.03.2018**
(21) Anmeldenummer: 05105531.7
(22) Anmeldetag: 22.06.2005
(51) Int. Cl.: G01F 23/26, A47L 15/00, D06F 39/02, D06F 58/04

(54) **Anordnung mit Flüssigkeitsbehälter für ein Haushaltsgerät und Haushaltsgerät**
Arrangement with liquid reservoir for a household appliance and household appliance
Arrangement avec réservoir de liquide pour un appareil ménager et appareil ménager

(30) Priorität: 22.06.2004 DE 102004030049
(43) Veröffentlichungstag der Anmeldung: 28.12.2005
(73) Patentinhaber: BSH Hausgeräte GmbH, 81739 München (DE)
(72) Erfinder: Sattler, Guido, 14612, Falkensee (DE)

(56) Entgegenhaltungen:
- DE-A1- 2 924 556
- DE-A1- 3 236 291
- DE-C1- 19 919 597
- GB-A- 2 248 939

## Beschreibung

Die Erfindung betrifft eine Anordnung mit einem Behälter, der zum Aufbewahren von Flüssigkeiten in einem Haushaltsgerät dient, und mit einer Vorrichtung zum Erfassen des Füllzustandes in dem Behälter, mit den weiteren Merkmalen des Oberbegriffs der Ansprüche 1 bzw. 2 und ein Haushaltsgerät mit einer solchen Anordnung. Eine Vorrichtung zum Erfassen des Füllzustandes in einem Behälter ist aus DE 32 36 291 C2 bekannt. Darin sind auf oder in einer Wand des Flüssigkeitsbehälters zwei Elektroden nebeneinander angeordnet, zwischen denen sich ein von einer der Flüssigkeit zugewandten Fläche einer Elektrode zur entsprechenden Fläche der anderen Elektrode ein elektrisches Feld bogenförmig ausbildet.

Eine weitere Füllstandserfassungsvorrichtung ist auch aus DE 29 24 556 A1 bekannt. Diese Füllstandsmessvorrichtung umfasst einen Behälter mit einer Ausformung, an der Elektroden angeordnet sind, welche einen Kondensator bilden und mit einer Messelektronik gekoppelt sind.

Weitere Füllstandmessvorrichtungen, bei denen Elektroden unter Bildung eines Kondensators zur Generierung eines Füllstandmesssignals verwendet werden, sind aus DE 199 19 597 C1 oder aus GB 2 248 939 A bekannt. Verständlicherweise wird das Feld dort am stärksten sein, wo sich die Elektrodenflächen am nächsten liegen. Das sind ausgerechnet die jeweils einander zugewandten schmalen Ränder der benachbarten Elektroden. Zwischen diesen schmalen Rändern bildet sich daher das Feld mit der größten Dichte aus, und zwischen diesen Rändern liegt der gemäß Definition unveränderbare dielektrische Zustand, nämlich Luft, wenn die Elektroden flach auf der Außenwand aufliegen, oder der Kunststoff der Wand, in die ggf. die Elektroden eingebettet sind. Daher werden dielektrische Veränderungen im Behälter, etwa durch sinkenden Flüssigkeitsspiegel in Höhe der angebrachten Elektroden, nur noch auf den sehr schwach ausgeprägten Feldanteil wirken, der sich bogenförmig von der einen, der Flüssigkeit zugewandten Fläche der einen Elektrode zu der entsprechenden Fläche der anderen Elektrode erstreckt. Entsprechend gering wird der Einfluss des sinkenden Flüssigkeitsspiegels auf dieses schwach ausgeprägte Feld sein, so dass die Empfindlichkeit des gesamten Messsystems in Bezug auf dielektrische Veränderungen im Behälter Wünsche übrig lassen wird.

Statt dessen werden dielektrische Veränderungen der Luft, etwa bei Veränderungen der absoluten Feuchtigkeit der Luft, auf das hoch konzentrierte Feld zwischen den Elektrodenkanten frei liegender Elektroden einen verhältnismäßig hohen Einfluss haben, so dass diese unerwünschten Effekte die zutreffende Bewertung der Messergebnisse der Kapazität des aus den Elektroden gebildeten Kondensators in Bezug auf dielektrische Veränderungen des Behälterinhalts sehr erschweren. Eine genügend genaue Erfassung des Füllzustands in diesem Behälter ist daher nicht möglich.

Der Erfindung liegt die Aufgabe zugrunde, eine Anordnung bestehend aus einem Behälter, der zum Aufbewahren von Flüssigkeiten in einem Haushaltgerät dient, einer Aufnahmeeinrichtung für den Behälter und einer Vorrichtung der eingangs genannten Art anzugeben, die in Bezug auf die Messsicherheit zur Erfassung des Füllzustandes in dem Behälter erheblich genauer ist, als beim Stand der Technik, und ferner auch die Überwachung auf Vorhandensein des Behälters möglich ist.. Hierbei kommt es vor allem nicht so sehr darauf an, den Füllzustand in Anteilen des maximal möglichen Füllgrades zu erfassen, sondern vor allem eine verlässliche Aussage darüber treffen zu können, ob der Behälter beispielsweise fast leer bzw, fast voll ist. Darüber hinaus soll ein Haushaltgerät mit einer solchen Anordnung bereitgestellt werden.

Erfindungsgemäß wird diese Aufgabe die Gegenstände der Ansprüche 1, 2 und 8 gelöst. Der den Hohlraum bildende Körper des Behälters weist eine Ausformung auf, die mindestens zwei einander gegenüber liegende Begrenzungswände hat, die eng mit den wenigstens annähernd parallel zueinander stehende Elektroden korrespondieren und deren Abstand voneinander genügend klein ist, um bei bei Elektronikschaltungen üblichen kleinen Messspannungen (z.B. 5V) zwischen den Elektroden ein annähernd störfreies elektrisches Feld entstehen zu lassen.

Durch die erfindungsgemäße Ausformung des Behälters, die einen flachen Hohlraum für die Flüssigkeit bildet, gelingt es, die Flüssigkeit innerhalb des Raumes anzuordnen, der durch die beiden einander gegenüber liegenden Elektroden begrenzt ist, ohne dass die Elekroden selbst Kontakt mit der Flüssigkeit haben. Dadurch liegt die zu überwachende Flüssigkeit unmittelbar in dem Raum, der die stärkste erreichbare Feldkonzentration hat. Jede dielektrische Veränderung in diesem Raum wird sofort eine zweifelsfrei messbare Veränderung der Kapazität des durch die Elektroden gebildeten Kondensators hervorrufen.

Ferner ist bei der Anordnung der Behälter in eine Aufnahmeeinrichtung einführbar und die Ausformung an der zuerst in die Aufnahmeeinrichtung eintauchenden Seite angebracht ist, entstehen besonders brauchbare Verhältnisse zur Verbindung der Elektroden mit der Auswerteeinrichtung und zur erleichterten Anbringung und Positionierung der Elektroden, um die zu überwachende Flüssigkeit in den am besten geeigneten Raum zwischen den Elektroden zu bringen.

Ferner sind bei einer ersten Ausbildung der Erfindung (Anspruch 1) die Elektroden in der Aufnahmeeinrichtung so angeordnet, dass die Ausformung zwischen die beiden in der Aufnahmeeinrichtung angeordneten Elektroden gelangt, wenn der Behälter bis zur Endposition in die Aufnahmeeinrichtung eingeführt worden ist. Dann müssen keinerlei elektrische Teile an dem beweglichen Behälter angebracht werden, die beim Hantieren mit dem Behälter außerhalb der Aufnahmeeinrichtung eventuell einer unzuträglichen Behandlung unterzogen werden.

Diese Gefahr spielt aber dann keine Rolle, wenn diese elektrischen Teile robust genug ausgebildet werden können. Dann kann es vorteilhaft sein, wenn die Elektroden gemäß einer alternativen Ausbildung der Erfindung (Anspruch 2) unmittelbar mit den beiden einander gegenüber liegenden Begrenzungswänden verbunden sind. Dann weisen die Elektroden außerdem vorteilhafterweise Kontaktelemente auf, die in Betriebsposition des Behälters mit Gegenkontakten der Aufnahmeeinrichtung verbunden sind.

Besonders vorteilhaft lässt sich die Vorrichtung der Anordnung dadurch weiterbilden, dass die Aufnahmeeinrichtung für das Einführen des Behälters entlang einer wenigstens annähernd horizontalen Strecke ausgebildet ist.

Wenn es die baulichen Gegebenheiten zulassen, kann die Aufnahmeeinrichtung für das Einführen des Behälters anstelle der horizontalen Anordnung entlang einer wenigstens annähernd vertikalen Strecke ausgebildet sein. Dann führen bereits geringere Mengenunterschiede der zu überwachenden Flüssigkeit zu einer messbaren Veränderung der Kapazität. Damit wäre eine kontinuierliche Erfassung des Füllzustandes möglich.

Wenn dann die Ausformung in der Nähe des Bodenbereiches des Hohlraumes angeordnet ist, lässt sich auf einfachste Weise erkennen, wann die bevorratete Flüssigkeit zur Neige geht, bzw. ob sich schon eine ausreichende Menge Flüssigkeit im Behälter befindet, wenn dieser zum Auffangen einer Flüssigkeit vorgesehen ist.

Die Ausformung kann aber auch in der Nähe des oberen Bereiches des Hohlraums angeordnet sein, wenn der annähernd maximale Füllgrad - im positiven wie im negativen Sinne - eines Behälters überwacht werden soll.

Anhand von in der Zeichung dargestellten Ausführungsbeispielen ist die Erfindung nachstehend erläutert. In der Zeichnung zeigen
- Fig. 1: einen in eine Aufnahmeeinrichtung eingesetzten Behälter gemäß der Erfindung mit Elektroden, die in der Aufnahmeeinrichtung befestigt sind, und
- Fig. 2: einen in eine Aufnahmeeinrichtung eingesetzten Behälter gemäß der Erfindung mit eigenen Elektroden.

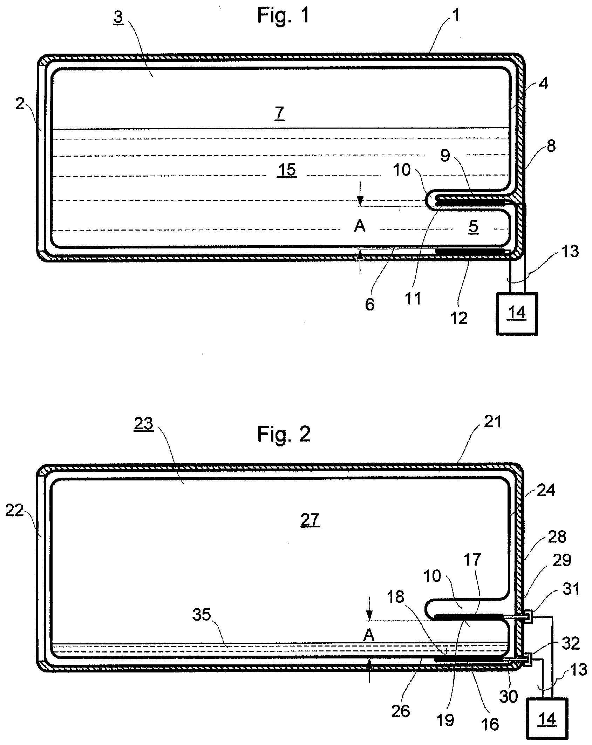

Die Aufnahmeeinrichtung in Fig. 1 und Fig. 2 ist jeweils durch ein geschlossenes Gehäuse 1 bzw. 21 mit einer Öffnung 2 bzw. 22, durch die der Behälter 3 bzw. 23 in horizontaler Richtung eingeführt werden kann. Die Behälter 3 und 23 haben an ihrer beim Einführen in das Gehäuse 1 bzw. 21 zuerst eintauchenden Seite 4 bzw 24 eine Ausformung 5 bzw. 25, die im hinteren Bodenbereich 6 bzw. 26 positioniert ist. An einer beliebigen Stelle hat der Behälter 3 bzw. 23 auch eine oder mehrere hier nicht näher dargestellte Öffnungen zum Befüllen und/oder zum Entleeren seines Hohlraums 7 bzw 27.

Das in Fig. 1 dargestellte Gehäuse 1 hat an seiner Rückseite 8 einen Fortsatz 9, der in einen Abstandsraum 10 zwischen dem allgemeinen Teil des Behälters 3 und die Ausformung 5 hineinragt. An diesem Fortsatz 9 ist eine Elektrode 11 angebracht, die einer zweiten Elektrode 12 möglichst genau und parallel gegenüber steht. Diese zweite Elektrode 12 ist an der Innenseite des Gehäusebodens angebracht. Beide Elektroden 11 und 12 sind über fest im Gehäuse 1 fixierte Leitungen 13 mit einer Auswerteschaltung 14 elektrisch verbunden.

Der Behälter 3 ist über die Hälfte gefüllt mit einer Flüssigkeit 15, die am Boden auch in die Ausformung 5 einfließt. Damit verändert sich das elektrische Feld zwischen den Elektroden 11 und 12 dramatisch, weil die Flüssigkeit eine von der vorher in der Ausformung 5 vorhandenen Luft deutlich unterschiedliche Dielektrizitätskonstante aufweist. Die Auswerteschaltung 14 erkennt und signalisiert daher, dass der Behälter 3 ausreichend voll ist.

Die Anordnung gemäß Fig. 1 hat den Vorteil, dass am Behälter selbst keine elektrisch leitenden Teile vorhanden sind. Ein solcher Behälter eignet sich daher bestens für die Bevorratung von chemisch reagierenden Flüssigkeiten, wie Waschmitteln für Wasch- oder Geschirrspülmaschinen, oder auch zum Sammeln von Kondensat bei Haushaltwäschetrocknern. Solche Kondensate enthalten regelmäßig immer noch geringe Waschmittel-Restanteile und müssen daher auf Dauer ebenfallls zu den reaktiven Substanzen gerechnet werden.

Der in Fig. 2 dargestellte Behälter 23 steckt ebenfalls in einem Gehäuse 21 ähnlich dem der Fig. 1. Obwohl der Behälter 23 eine gleichartige Ausformung aufweist wie der Behälter 3 in Fig. 1, hat sein Gehäuse 21 an der Rückseite 24 keinen Fortsatz, weil am Gehäuse 21 keine Elektroden befestigt sind. Vielmehr sind die für die Erfindung erforderlichen Elektroden 16 und 17 unmittelbar an oder in der Wandung der einander gegenüber liegenden Begrenzungswände 18 und 19 der Ausformung 25 angeordnet. Die Elektroden 16 und 17 können dazu von außen auf die Begrenzungswände 18 und 19 aufgeklebt oder aufgeschweißt oder in das Material der Begrenzungswände eingebettet sein.

Die Elektroden 16 und 17 haben an ihren der Gehäuse-Rückwand 28 zugewandten Enden je einen Steckerstift 29 und 30, der in Betriebsposition des Behälters 23 durch einen zugeordneten Durchbruch in der Gehäuse-Rückwand 28 hindurch ragt. Auf der Außenseite der Rückwand 28 ist je eine Steckerbuchse 31 und 32 angebracht, die über elektrische Leitungen 33 mit einer Auswerteschaltung 14 verbunden sind.

Anhand eines im Behälter vorhandenen Rests von Flüssigkeit 35 ist erkennbar, wie sensibel die erfindungsgemäße Vorrichtung zur Erfassung des Füllzustandes in einem Behälter, nämlich der Messeinrichtung aus Elektroden 11 und 12 oder 16 und 17 einerseits und Auswerteschaltung 14 andererseits, eingestellt werden kann, um auch noch kleinste Reste von Flüssigkeit 35 zwischen den Kondensatorplatten (Elektroden) wahrzunehmen.

In den Ausführungsbeispielen sind nur horizontal bewegliche Behälter 3 bzw. 23 im Zusammenspiel mit Messelektroden 12, 12 bzw. 16, 17 dargestellt worden. Ohne vom Erfindungsgedanken abweichen zu müssen, können die Behälter aber auch fest eingebaute Behälter sein oder Behälter die in jeder anderen Richtung beweglich, beispielsweise vertikal beweglich, in eine Aufnahmeeinrichtung einführbar sind. Die Aufnahmeeinrichtung muss auch kein den Behälter umschließendes Gehäuse sein. Als Minimalaufwand genügt eine einfache Schubführung, die am Ende eine Vorrichtung zum Halten der Elektroden oder von Steckvorrichtungen besitzt. Die Ausformungen 5 des Behälters 3 bzw. 23 können sowohl - wie hier dargestellt - im Bodenbereich 6 bzw. 26 des Behälters oder an völlig anderen Orten des Behälters angeordnet sein - je nachdem, welcher jeweilige Füllzustand erfasst werden soll.

Die Elektroden - egal, wie und wo sie im oder am Behälter angeordet sind - sollen einen Abstand A zueinander haben, der so groß gewählt worden ist, dass bei einer kleinen Messspannung von üblicherweise 5 V sich ein elektrisches Feld ausbildet, das bei einer gewünschterweise kleinen Flüssigkeitsmenge innerhalb des Raumes der Ausformung 5 noch einen messbaren Unterschied zum Feld bei der Gesamtfüllung dieses Raumes ergibt. Dieser messbare Unterschied muss natürlich auch noch einen genügend großen Abstand haben zu den ansonsten noch beeinflussenden Störfeldern, die aus der Umgebung des Messortes auf das Elektrodenfeld der erfindungsgemäßen Erfassungsvorrichtung regelmäßig einwirken können. Außerdem können andere Störgrößen die elektronische Auswertung erschweren, wie Verschmutzungen, Toleranzen oder Materialveränderungen. Dafür muss der Elektrodenabstand hinreichend groß gewählt werden, wenn er auch für die elektronische Auswertung besser klein gehalten werden sollte.

In der Praxis haben sich folgende Abmessungen als brauchbar erwiesen:
Für die Größe der Elektrodenflächen je 25 cm², für den Abstand der Elektroden zueinander A = 10 bis 20 mm.

In weiterer Ausgestaltung der Erfindung können bei einem horizontal oder vertikal orientierten Behälter auch mehrere Elektrodenpaare in unterschiedlichen Höhen entsprechend der Vorgabe durch Anspruch 1 bzw. 2 angeordnet sein. Dann kann der Füllzustand stufenweise überwacht werden.

Ferner ist auch die Überwachung auf Vorhandensein des Behälters dadurch möglich, dass die Veränderung des Dielektrikums bei nicht vorhandenem Behälter gegenüber dem Zustand bei eingeschobenem Behälter erkannt wird. Bei Außenkontaktierung der Elektroden kann auch die Kapazitätsänderung bei Kontaktierung bzw. Unterbrechung des Kontakts für die Elektroden zu einer Erkennung der Anwesenheit des Behälters in der Aufnahmeeinrichtung benutzt werden.

## Patentansprüche

1. Anordnung bestehend aus einem Behälter (3), der zum Aufbewahren von Flüssigkeiten (15) in einem Haushaltsgerät dient, einer Aufnahmeeinrichtung (1) für den Behälter (3) und einer Vorrichtung zum Erfassen des Füllzustandes in dem Behälter (3), welcher einen einen Hohlraum (7) umschließenden Körper mit Wänden aus dielektrischen Werkstoff, insbesondere Kunststoff, aufweist, unter Verwendung von aus elektrisch leitendem Material gebildeten Elektroden (11, 12) als Elemente eines elektrischen Kondensators, der in Betriebsposition des Behälters (3) mit einer Auswerteschaltung (14) gekoppelt ist, wobei der den Hohlraum (7) bildende Körper des Behälters (3) eine Ausformung (5) aufweist, die mindestens zwei einander gegenüber liegende Begrenzungswände hat, die eng mit den wenigstens annähernd parallel zueinander stehenden Elektroden (11, 12), korrespondieren und deren Abstand (A) voneinander genügend klein ist, um bei den bei Elektronikschaltungen üblichen kleinen Messspannungen, insbesondere bei einer Messspannung von 5 Volt, zwischen den Elektroden (11, 12), ein annähernd störfreies elektrisches Feld entstehen zu lassen, **dadurch gekennzeichnet, dass** der Behälter (3) in die Aufnahmeeinrichtung (1) einführbar ist und die Ausformung (5) an der zuerst in die Aufnahmeeinrichtung eintauchenden Seite (4) angebracht ist und dass die Elektroden (11, 12) in der Aufnahmeeinrichtung (1) so angeordnet sind, dass die Ausformung (5) zwischen die beiden in der Aufnahmeeinrichtung (1) angeordneten Elektroden (11, 12) gelangt, wenn der Behälter (3) bis zur Endposition in die Aufnahmeeinrichtung (1) eingeführt worden ist.

2. Anordnung bestehend aus einem Behälter (23), der zum Aufbewahren von Flüssigkeiten (15, 35) in einem Haushaltsgerät dient, einer Aufnahmeeinrichtung (21) für den Behälter (23) und einer Vorrichtung zum Erfassen des Füllzustandes in dem Behälter (23), welcher einen einen Hohlraum (27) umschließenden Körper mit Wänden aus dielektrischen Werkstoff, insbesondere Kunststoff, aufweist, unter Verwendung von aus elektrisch leitendem Material gebildeten Elektroden (16, 17) als Elemente eines elektrischen Kondensators, der in Betriebsposition des Behälters (23) mit einer Auswerteschaltung (14) gekoppelt ist, wobei der den Hohlraum (27) bildende Körper des Behälters (23) eine Ausformung aufweist, die mindestens zwei einander gegenüber liegende Begrenzungswände (18, 19) hat, die eng mit den wenigstens annähernd parallel zueinander stehenden Elektroden (16, 17) korrespondieren und deren Abstand (A) voneinander genügend klein ist, um bei den bei Elektronikschaltungen üblichen kleinen Messspannungen, insbesondere bei einer Messspannung von 5 Volt, zwischen den Elektroden (16, 17) ein annähernd störfreies elektrisches Feld entstehen zu lassen, und an Begrenzungswänden (18, 19) die Elektroden (16, 17) unmittelbar mit den beiden einander gegenüber liegenden Begrenzungswänden (18, 19) der Ausformung verbunden sind, **dadurch gekennzeichnet, dass** der Behälter (23) in eine Aufnahmeeinrichtung (21) einführbar ist und die Ausformung an der zuerst in die Aufnahmeeinrichtung eintauchenden Seite (24) des Behälters (23) angebracht ist und die Elektroden (16, 17), Kontaktelemente (29, 30) aufweisen, die in Betriebsposition des Behälters (23) mit Gegenkontakten (31, 32) der Aufnahmeeinrichtung (21) verbunden sind.

3. Anordnung nach Anspruch 1 oder 2, **dadurch gekennzeichnet, dass** die Aufnahmeeinrichtung (1, 21) so ausgebildet ist, dass der Behälter (3, 23) entlang einer wenigstens annähernd horizontalen Strecke einführbar ist.

4. Anordnung nach Anspruch 1, 2 oder 3, **dadurch gekennzeichnet, dass** die Ausformung (5) in der Nähe des Bodenbereiches (6, 26) des Hohlraums (7, 27) angeordnet ist.

5. Anordnung nach einem der vorstehenden Ansprüche, **dadurch gekennzeichnet, dass** die Ausformung in der Nähe des oberen Bereiches des Hohlraums (7, 27) angeordnet ist.

6. Anordnung nach Anspruch 1 oder nach Anspruch 1 und einem der Ansprüche 3 bis 5, **dadurch gekennzeichnet, dass** der Behälter (3, 23) für die Bevorratung von chemisch reagierenden Flüssigkeiten, insbesondere von Waschmittel, ausgebildet ist.

7. Anordnung nach Anspruch 1 oder nach Anspruch 1 und einem der Ansprüche 3 bis 5, **dadurch gekennzeichnet, dass** der Behälter (3, 23) zum Sammeln von Kondensat ausgebildet ist.

8. Haushaltsgerät, welches eine Anordnung nach einem der vorstehenden Ansprüche umfasst.

9. Haushaltsgerät nach Anspruch 8, **dadurch gekennzeichnet, dass** das Haushaltsgerät eine Wasch- oder Geschirrspülmaschine mit einer Anordnung nach Anspruch 6 oder ein Haushaltswäschetrockner mit einer Anordnung nach Anspruch 7 ist.

## Claims

1. Arrangement consisting of a reservoir (3) which serves to retain liquids (15) in a household appliance, a receiving device (1) for the reservoir (3) and an apparatus for detecting the fill level in the reservoir (3) which comprises a body enclosing a hollow space (7) with walls made of a dielectric material, in particular plastic, using electrodes (11, 12) formed from an electrically conductive material as elements of an electric capacitor which in the operating position of the reservoir (3) is coupled to an evaluation circuit (14), wherein the body of the reservoir (3) forming the hollow space (7) comprises a formation (5) which has at least two mutually opposing delimiting walls which correspond closely to the electrodes (11, 12) standing at least approximately parallel to one another, and whose spacing (A) from one another is sufficiently small to enable an approximately interference-free electric field to arise between the electrodes (11,12) at the small measurement voltages customary in the case of electronic circuits, in particular at a measurement voltage of 5 volts, **characterised in that** the reservoir (3) can be introduced into the receiving device (1) and the formation (5) is attached to the side (4) first immersed into the receiving device and that the electrodes (11, 12) are arranged in the receiving device (1) such that the formation (5) ends up between the two electrodes (11, 12) arranged in the receiving device (1) if the reservoir (3) has been introduced as far as the end position into the receiving device (1).

2. Arrangement consisting of a reservoir (23) which serves to retain liquids (15, 35) in a household appliance, a receiving device (21) for the reservoir (23) and an apparatus for detecting the fill level in the reservoir (23) which comprises a body enclosing a hollow space (27) with walls made of a dielectric material, in particular plastic, using electrodes (16, 17) formed from an electrically conductive material as elements of an electric capacitor which in the operating position of the reservoir (23) is coupled to an evaluation circuit (14), wherein the body of the reservoir (23) forming the hollow space (27) comprises a formation which has at least two mutually opposing delimiting walls (18, 19) which correspond closely to the electrodes (16, 17) standing at least approximately parallel to one another, and whose spacing (A) from one another is sufficiently small to enable an approximately interference-free electric field to arise between the electrodes (16, 17) at the small measurement voltages customary in the case of electronic circuits, in particular at a measurement voltage of 5 volts, and on delimiting walls (18, 19) the electrodes (16, 17) are directly connected to the two mutually opposing delimiting walls (18, 19) of the formation, **characterised in that** the reservoir (23) can be introduced into a receiving device (21) and the formation is attached to the side (24) of the reservoir (23) first immersed into the receiving device and the electrodes (16, 17) have contact elements (29, 30) which in the operating position of the reservoir (23) are connected to countercontacts (31, 32) of the receiving device (21).

3. Arrangement according to claim 1 or 2, **characterised in that** the receiving device (1, 21) is designed such that the reservoir (3, 23) can be introduced along an at least approximately horizontal path.

4. Arrangement according to claim 1, 2 or 3, **characterised in that** the formation (5) is arranged in the vicinity of the base region (6, 26) of the hollow space (7, 27).

5. Arrangement according to one of the preceding claims, **characterised in that** the formation is arranged in the vicinity of the upper region of the hollow space (7, 27).

6. Arrangement according to claim 1 or according to claim 1 and one of claims 3 to 5, **characterised in that** the reservoir (3, 23) is designed for the storage of chemically reactive liquids, in particular of detergent.

7. Arrangement according to claim 1 or according to claim 1 and one of claims 3 to 5, **characterised in that** the reservoir (3, 23) is designed to collect condensate.

8. Household appliance which comprises an arrangement according to one of the preceding claims.

9. Household appliance according to claim 8, **characterised in that** the household appliance is a washing machine or dishwasher with an arrangement according to claim 6 or a household tumble dryer with an arrangement according to claim 7.

## Revendications

1. Agencement composé d'un réservoir (3) qui sert à stocker des liquides (15) dans un appareil ménager, d'un moyen de logement (1) pour le réservoir (3) et d'un dispositif de détection du niveau de remplissage dans le réservoir (3), ledit réservoir comprenant un corps enveloppant un espace creux (7) et doté de parois constituées d'un matériau diélectrique, notamment de matière plastique, en utilisant des électrodes (11, 12) constituées d'un matériau électriquement conducteur en tant qu'éléments d'un condensateur électrique, qui est couplé à un circuit d'évaluation (14) en position de service du réservoir (3), dans lequel le corps formant l'espace creux (7) du réservoir (3) inclut une forme (5) qui comprend au moins deux parois de délimitation opposées l'une à l'autre qui correspondent étroitement aux électrodes (11, 12) au moins approximativement parallèles et dont l'écartement (A) est suffisamment petit pour engendrer, aux petites tensions de mesure usuelles dans les circuits électroniques, notamment à une tension de mesure de 5 volts, un champ électrique pratiquement homogène entre les électrodes (11, 12) **caractérisé en ce que** le réservoir (3) peut être inséré dans le moyen de logement (1) et la forme (5) est mise en place dans le côté immergé (24) en premier dans le moyen de logement et **en ce que** les électrodes (11, 12) sont disposées dans le moyen de logement (1) de telle sorte que la forme (5) passe entre les deux électrodes (11, 12) disposées dans le moyen de logement (1) lorsque le réservoir (3) a été inséré jusqu'à la position finale dans le moyen de logement (1).

2. Agencement composé d'un réservoir (23) qui sert à stocker des liquides (15, 35) dans un appareil ménager, d'un moyen de logement (21) pour le réservoir (23) et d'un dispositif de détection du niveau de remplissage dans le réservoir (23), ledit réservoir comprenant un corps enveloppant un espace creux (27) et doté de parois constituées d'un matériau diélectrique, notamment de matière plastique, en utilisant des électrodes (16, 17) constituées d'un matériau électriquement conducteur en tant qu'éléments d'un condensateur électrique, qui est couplé à un circuit d'évaluation (14) en position de service du réservoir (23), dans lequel le corps formant l'espace creux (27) du réservoir (23) inclut une forme qui comprend au moins deux parois de délimitation (18, 19) opposées l'une à l'autre qui correspondent étroitement aux électrodes (16, 17) au moins approximativement parallèles et dont l'écartement (A) est suffisamment petit pour engendrer, à des petites tensions de mesure usuelles dans les circuits électroniques, notamment à une tension de mesure de 5 volts, un champ électrique pratiquement homogène entre les électrodes (16, 17), et, au niveau des parois de délimitation (18, 19), les électrodes (16, 17) sont reliées directement aux deux parois de délimitation (18, 19) opposées de la forme,
**caractérisé en ce que** le réservoir (23) peut être inséré dans un moyen de logement (21), la forme est mise en place dans le côté immergé (24) en premier du réservoir (23) dans le moyen de logement et les électrodes (16, 17) comprennent des éléments de contact (29, 30) qui sont associés, en position de service du réservoir (23), à des contre-contacts (31, 32) du moyen de logement (21).

3. Agencement selon la revendication 1 ou 2, **caractérisé en ce que** le moyen de logement (1, 21) est conçu de manière à ce que le réservoir (3, 23) peut être inséré le long d'une trajectoire au moins approximativement horizontale.

4. Agencement selon la revendication 1, 2 ou 3, **caractérisé en ce que** la forme (5) est disposée à proximité de la partie de fond (6, 26) de l'espace creux (7, 27).

5. Agencement selon l'une quelconque des revendications précédentes, **caractérisé en ce que** la forme est disposée à proximité de la partie supérieure de l'espace creux (7, 27).

6. Agencement selon la revendication 1 ou selon la revendication 1 et l'une des revendications 3 à 5, **caractérisé en ce que** le réservoir (3, 23) est conçu pour stocker des liquides réagissant chimiquement, notamment des détergents.

7. Agencement selon la revendication 1 ou selon la revendication 1 et l'une des revendications 3 à 5, **caractérisé en ce que** le réservoir (3, 23) est conçu pour collecter des condensats.

8. Appareil ménager qui comprend un agencement selon l'une quelconque des revendications précédentes.

9. Appareil ménager selon la revendication 8, **caractérisé en ce que** l'appareil ménager est une machine à laver ou un lave-vaisselle comprenant un agencement selon la revendication 6 ou un sèche-linge ménager comprenant un agencement selon la revendication 7.
